## Europäisches Patentamt
## European Patent Office
## Office européen des brevets

(19)

(11) Veröffentlichungsnummer: **0 199 299**
**B1**

(12) **EUROPÄISCHE PATENTSCHRIFT**

(45) Veröffentlichungstag der Patentschrift:
06.12.89

(51) Int. Cl.⁴: **B 65 G 39/16,** A 01 C 17/00

(21) Anmeldenummer: **86105366.8**

(22) Anmeldetag: **18.04.86**

(54) **Grossflächenstreuer, insbesondere Düngerstreuer.**

(30) Priorität: **19.04.85 DE 3514127**
**11.07.85 DE 3524777**

(43) Veröffentlichungstag der Anmeldung:
**29.10.86 Patentblatt 86/44**

(45) Bekanntmachung des Hinweises auf die Patenterteilung:
**06.12.89 Patentblatt 89/49**

(84) Benannte Vertragsstaaten:
**BE DE FR GB LU NL**

(56) Entgegenhaltungen:
EP-A-0 072 466
DE-A-2 838 463
DE-A-3 016 203
DE-C-174 491
FR-A-678 956
FR-A-2 528 019
FR-A-2 544 162
US-A-2 725 757
US-A-2 916 139

**Die Akte enthält technische Angaben, die nach dem Eingang der Anmeldung eingereicht wurden und die nicht in dieser Patentschrift enthalten sind.**

(73) Patentinhaber: **Amazonen- Werke H. Dreyer GmbH & Co. KG, Postfach 51, D-4507 Hasbergen- Gaste (DE)**

(72) Erfinder: **Higgen, Reinhard, Gartenstrasse 1, D-2872 Hude i.O. (DE)**

(74) Vertreter: **Patentanwälte Grünecker, Kinkeldey, Stockmair & Partner, Maximilianstrasse 58, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

2

## Beschreibung

Die Erfindung betrifft einen Großflächenstreuer gemäß des Oberbegriffs des Anspruchs 1.

Ein durch die DE-A-3 313 892 bekannter Großflächenstreuer dieser Art weist ein im unteren Bereich des langgestreckten Vorratsbehälters angeordnetes, antreibbares Förderorgan auf. Bei diesem Förderorgan handelt es sich um ein breites, langsam umlaufendes Förderband, das durch schräg angestellte oder konische Steuerrollen unterhalb des Obertrums derart geführt wird, daß immer ein mittiger Lauf gewährleistet ist. Dieser mittige Bandlauf läßt sich jedoch nur realisieren, wenn in regelmäßigen Abständen eine mittige Ausrichtung durch manuelles Nachstellen des Förderbandes vorgenommen wird. Diese genaue Ausrichtung des Förderbandes kann sehr zeitaufwendig sein und erfordert besonders beim Ersteinsatz, wenn sich Band und Rollen unter Belastung einlaufen müssen, eine große Sorgfalt. Weiterhin kann es auch durch äußere Einflüsse, wie Staub, Feuchtigkeit, ungleiche Belastung, Fahren am Hang usw., zu Störungen des mittigen Bandlaufes kommen. Insbesondere diese Einflüsse wirken sich sehr nachteilig aus, weil sie sehr unregelmäßig und in nicht vorhersehbarer Weise, auch während des Einsatzes, auftreten. In jedem Fall ist ein manuelles Nachstellen zur mittigen Ausrichtung des Förderbandes erforderlich, wobei durch mangelnde Sorgfalt gravierende Fehler gemacht werden können, deren Folgen Bandschäden sind.

Aus der US-A-2 960 139 ist eine Bandsteuerung für den mittigen Bandlauf eines Förderbandes bekannt, die einen schwenkbaren Steuerrahmen mit der einen Umlenkwalze und eine sich von dem Steuerrahmen zur anderen Umlenkwalze erstreckende Abtastanordnung aufweist. Die Abtastanordnung umfaßt zwei Führungsrollen, die um auf rechte Achsen drehbar gelagert sind und den Rändern eines Förderbandtrums punktförmig anliegen. Der Bandförderer ist als langes, schmales Förderband, insbesondere zum Einsatz im Bergbau, ausgebildet. Die Abtastanordnung ist relativ dicht an der schwenkbaren Umlenkwalze angeordnet. Die aufzubringenden Kräfte sind bei einem langen, schnell laufenden Förderband naturgemäß gering, ebenso wie die für insbesondere den vorgesehenen Einsatzbereich gestellten Anforderungen an die Steuergenauigkeit. Infolgedessen sind möglicherweise auftretende Einbeulungen der Förderbandränder durch die punktförmig an denselben anliegenden Führungsrollen und das sich daraus ergebende Ausmaß der Fehlsteuerung bei der bekannten Bandsteuerung nicht kritisch. Für ein breites, langsam umlaufendes Förderband bei einem Großflächenstreuer hingegen ist die bekannte Bandsteuerung nicht zu gebrauchen.

Aus der DE-A-3 016 203 ist eine ähnliche Bandsteuerung für ein ebenfalls schnell laufendes, schmales Förderband, insbesondere für den Einsatz in Anlagen zur Herstellung von Spanplatten, Faserplatten etc., bekannt. Statt eines Steuerrahmens ist ein mittels einer Stellstange verstellbares Lager zum Verschwenken der zugeordneten, ersten Umlenkwalze vorgesehen. Im Bereich der zweiten Umlenkwalze ist ein Abtastfinger angeordnet, der dem Rand des Förderband-Obertrums anliegt und an dem freien Ende der Stellstange befestigt ist. Letztere ist um ihre Längsachse schwenkbar und axial verschiebbar in einem Lagerrohr gelagert. Die Stellstange stützt sich über eine Schrägfläche an einer Schrägfläche des Lagerrohrs ab. Seitliches Auswandern des Förderbandes verschwenkt den Abtastfinger und damit die Stellstange. Über die Schrägflächen wird die Verschwenkbewegung der Stellstange in einer Axialbewegung umgewandelt, die eine Verstellung des Lagers und Verschwenkung der ersten Umlenkwalze zur Folge hat. Auch hier sind aufgrund des schmalen schnell laufenden Förderbandes die aufzubringenden Kräfte ebenso wie die für den vorgesehenen Einsatzbereich gestellten Anforderungen an die Steuergenauigkeit gering, so daß eventuell auftretende Einbeulungen des Förderbandrandes durch den punktförmig anliegenden Abtastfinger und das sich daraus ergebende Ausmaß der Fehlsteuerung nicht kritisch sind. Deshalb ist diese bekannte Bandsteuerung für ein breites, langsam umlaufendes Förderband für einen Großflächenstreuer nicht geeignet, insbesondere auch unter Berücksichtigung des konstruktiv aufwendigen und empfindlichen Übertragungsmechanismus mit Umwandlung der Schwenkbewegung des Abtastfingers und der Stellstange in eine Axialverschiebung derselben und erneut in eine Verschwenkbewegung des Lagers der ersten Umlenkwalze.

Der Erfindung liegt daher die Aufgrunde zugrunde, bei einem Großflächenstreuer der eingangs genannten Art auf einfache Weise einen sicheren mittigen Bandlauf sowohl bei Neueinlauf des Bandes wie auch unter schwierigen Einsatzbedingungen zu erreichen.

Diese Aufgabe wird erfindungsgemäß durch den kennzeichnenden Teil des Anspruchs 1 gelöst.

Infolge dieser Maßnahme wird in überraschend einfacher Weise für den bekannten Großflächenstreuer eine automatische Bandsteuerung realisiert, wobei in jedem Fall ein sicherer mittiger Bandlauf gewährleistet ist. Bei mit automatischer Bandsteuerung ausgerüsteten Großflächenstreuern entfällt das ständige manuelle Nachstellen zur mittigen Ausrichtung des Bandes. Vor dem Ersteinsatz ist lediglich eine werksseitige Grundeinstellung des Förderbandes vorzunehmen, ansonsten übernimmt die automatische Bandsteuerung das Ausrichten und Nachstellen des Bandes. Die automatische Bandsteuerung ist derart ausgelegt, daß sie sich selbst korrigiert und mechanisch einfach und robust ohne Zuführung von Fremdenergie arbeitet. Störungen des mittigen Bandlaufes werden sofort korrigiert und damit verbundene Bandschäden in besonders vorteilhafter Weise verhindert. Eine neue Grundeinstellung ist nur in größeren Wartungsintervallen u.U.

vorzunehmen, wenn das Förderband sich einseitig verlängert hat. Durch die automatisch Bandsteuerung werden die Einflüsse, die zur einem unmittigen Bandlauf führen würden, eliminiert. Da die Übertragungselemente zumindest annähernd bis zu der fest angeordneten Umlenkwalze reichen und in diesem Bereich die Fuhrungselemente tragen, wird schon bei geringem außermittigen Bandlauf ein schnelles Ansprechen der automatischen Bandsteuerung erzielt. Die Übertragungselemente erstrecken sich über eine relativ große Distanz. Die Steuergenauigkeit ist sehr hoch, da bereits bei geringer Abweichung vom mittigen Bandlauf ein automatisches Nachstellen zur mittigen Ausrichtung des Förderbandes erfolgt. Bedingt durch die langen Übertragungselemente läßt sich der Steuerrahmen bereits durch sehr geringe Kräfte zum Beseitigen der Störung des mittigen Bandlaufes schwenken.

Die quer zum Förderband verlaufenden, unterhalb und oberhalb eines Förderbandtrums angeordneten Führungselemente, wie beispielsweise runde, unrunde oder eckige Stäbe, Schaber, Rollen etc., führen das Förderband aufgrund der erheblich vergrößerten Berührungsfläche sehr bandschonend. Die Walkarbeit an den Kanten des Förderbandtrums ist im Gegensatz zu den punktförmig an den Außenseiten des Förderbandes anliegenden Führungsrollen bzw. Abtastfingern wesentlich verringert. Durch die Anordnung jeweils mindestens eines Führungselementes unterhalb und oberhalb des Förderbandtrums und die sich daraus ergebende beidseitige flächige Einspannung des Förderbandes wird an dieser Stelle, an der die Abweichungen vom mittigen Bandlauf erfaßt werden, das Widerstandsmoment des Förderbandes erheblich vergrößert. Auf diese Weise wird ein Einbeulen des Förderbandrandes sowie ein Ausweichen des Förderbandes und damit eine fehlerhafte Bandsteuerung sicher vermieden.

Eine weitere Ausgestaltung der Erfindung sieht vor, daß die Übertragungselemente gegenüber dem Steuerrahmen verstellbar bzw. einstellbar angeordnet sind. Diese Einstellbarkeit erhöht die Justiermöglichkeiten und ist insbesondere dann von Vorteil, wenn nicht ganz genau geklebte Förderbänder, d.h. Förderbänder, deren Außenseiten unterschiedlich lang sind, so justiert werden sollen, daß sich ein mittiger Bandlauf ergibt.

Eine weitere Ausgestaltung der Erfindung sieht vor, daß der Steuerrahmen an einem Querträger des Düngersteuerrahmens schwenkbar gelagert ist und daß zwischen dem Querträger und dem Düngersteuerrahmen Spannelemente angeordnet sind. Mittels des Querträgers, der sich wie der Steuerrahmen zwischen dem oberen und unteren Bandtrum erstreckt, kann das Förderband vorgespannt werden. Die Achse, um die der Steuerrahmen verschwenkt wird, verläuft in einer bevorzugten Ausgestaltung etwa in der Mitte der Bandbreite, so daß sich bezüglich der Bandmitte eine symmetrische Verschwenkbewegung des Steuerrahmens ergibt. Es ist aber auch möglich, die Achse im seitlichen Bereich des Bandes anzuordnen. Mit entsprechenden Ausgleichsfedern läßt sich dann ebenfalls eine symmetrische Verschwenkbewegung nach zwei Seiten erreichen.

Eine weitere, sehr vorteilhafte Ausgestaltung der Erfindung sieht vor, daß die Rollen in Längsrichtung des Förderbandtrums so angeordnet sind, daß das Förderbandtrum zumindest etwas umgelenkt wird.

Die Führung des Förderbandes zwischen mindestens zwei Rollen bzw. Führungselementen wirkt sich als sehr bandschonend aus, da sich die Berührungsfläche der Führungselemente mit dem Förderband wesentlich vergrößert hat. Die erfindungsgemäße Anordnung der Rollen sowie die Umlenkung des Förderbandtrums bewirken eine flächenförmige Berührung zwischen Förderband und Rollen. Die Walkarbeit an den Kanten des Förderbandtrums wird im Gegensatz zu den um aufrechte Achsen drehbar gelagerten Führungsrollen gemäß dem Stand der Technik (US-A-2 960 139) die an den Außenseiten des Förderbandes anliegen und eine punktförmige Berührungsstelle aufweisen, wesentlich verringert. Ein Einbeulen des Förderbandes ist so nicht mehr möglich, ebensowenig ein fehlerhaftes Ausweichen des Förderbandes, da oberhalb und unterhalb des Förderbandtrums jeweils mindestens ein Führungselement angeordnet ist. Durch diese Anordnung der Führungselemente wird das Förderbandtrum zwischen den Führungselementen eingespannt, was dazu führt, daß das Widerstandsmoment des Förderbandes an dieser Stelle, an der die Abweichungen vom mittigen Bandlauf erfaßt werden, wesentlich vergrößert wird.

In weiterer Ausgestaltung dieser Ausführungsform ist erfindungsgemäß vorgesehen, daß oberhalb und unterhalb des Förderbandtrums jeweils zumindest eine drehbare und/oder starre bzw. wirt drehbare Rolle angeordnet ist. Infolge dieser Maßnahme entsteht eine stabile und unempfindliche automatische Bandsteuerung, wobei das Regelverhalten des Steuerrahmens sehr wirksam ist, da beide Rollen mitsteuern. Durch die erfindungsgemäße Anordnung der Rollen wird das Förderbandtrum zumindest etwas umgelenkt, wobei die innere Stabilität des Förderbandtrums in diesem Bereich vergrößert wird. Ein seitliches Ausweichen des Förderbandtrums nach rechts oder links wird einwandfrei erfaßt, ohne daß es zu einem fehlerhaften Einbeulen des Trums kommt. Die Seitwärtsbewegung des Förderbandes wird bereits bei der geringsten Abweichung vom mittigen Bandlauf von den Rollen über die Hebelarme auf den Steuerrahmen übertragen und bewirkt ein leichtes Verschwenken des Steuerrahmens, was eine Rückführung des Förderbandes in den mittigen Bandlauf zu Folge hat.

Zum Erzielen einer noch besseren Förderbandführung ist in einer erfindungsgemäßen Ausführungsform vorgesehen, daß drei Rollen ober- und unterhalb des Förderbandtrums angeordnet sind. Hierbei können oberhalb des Förderbandtrums zwei Rollen und unterhalb des Förderbandtrums eine Rolle angeordnet sein; wobei es aber auch möglich ist, die Anordnung der Rollen zu vertauscben. Mit Hilfe dieser Rollenanordnung läßt sich die automatische Bandsteuerung auch bei besonders weichen, instabilen Förderbändern einsetzen.

Eine Weiterbildung sieht auch vor, daß die Drehachsen der Rollen parallel zu den Drehachsen der Umlenkwalzen verlaufen. Infolge dieser Maßnahmen wird das Förderbandtrum zwischen den Rollen eingespannt. Die Berührungsstelle zwischen den als Rollen ausgebildeten Führungselementen und dem Förderbandtrum ist wesentlich vergrößert, da es sich um eine flächenförmige Berührung zwischen Förderband und Führungsrollen handelt. Das Widerstandsmoment des Förderbandtrums wird vergrößert. Ein Einbeulen oder ein fehlerhaftes Ausweichen des Förderbandes ist nicht mehr möglich.

Weiterhin ist vorgesehen, daß der lichte Abstand zwischen den Oberflächen der jeweils einander am dichtesten benachbarten Rollen zumindest etwas größer als die Dicke des Transportbandes ist. Infolge dieser Maßnahme soll verhindert werden, daß das Förderband zwischen den Rollen eingeklemmt wird. Der lichte Abstand zwischen den Oberflächen der jeweils benachbarten Rollen garantiert auch bei verschmutzten Förderbändern einen störungsfreien Lauf, so daß die Betriebssicherheit stets gewährleistet ist. Ein Einklemmen des Förderbandes würde zu einem erhöhten Antriebsbedarf des Düngerstreuers und im ungünstigsten Fall zum Stillstand des Förderbandes führen.

Es ist außerdem vorteilhaft, wenn die Rollen in einem Rahmen angeordnet sind, der seitlich an das Förderband anliegende Elemente aufweist, wobei die Rollen zweckmäßigerweise jeweils zumindest annähernd bis zu diesen Elementen reichen. Somit reichen die Rollen über die gesamte Breite des Förderbandes. Durch die Anordnung der Rollen in einem Rahmen ergibt sich ein kompaktes Bauteil, daß über eine Hebelanordnung oder eine Rahmenkonstruktion mit dem um eine aufrechte Achse verschwenkbaren Steuerrahmen verbunden ist und das seitliche Ausweichen des Förderbandes auf den Steuerrahmen überträgt. Die seitlich an dem Förderbandtrum anliegenden Elemente verhindern ein Abwandern des Förderbandes aus dem Bereich der Rolle nach außen. Infolge dieser Maßnahmen ergibt sich eine Zwangsführung des Förderbandes im Bereich der Rollen. Die im Rahmen angeordneten Rollen mit den am Förderband anliegenden Elementen folgen jeder Seitwärtsbewegung des Förderbandes, was zu einem Verschwenken des Steuerrahmens führt und eine Rückführung des Förderbandes in den mittigen Bandlauf zur Folge hat.

In einer weiteren Ausführuangsform ist vorgesehen, daß die seitlich neben dem Förderband anliegenden Elemente als Gleitkufen mit nach außen gebogenen Einlaufflächen ausgebildet sind. Diese Gleitkufen sollen für eine bessere Führung des Förderbandtrums sorgen und verbessern zudem noch die Funktionsweise der automatischen Bandsteuerung. Die nach außen gebogenen Einlaufflächen sorgen für eine schonende Bandführung.

In einer anderen Ausführungsform ist vorgesehen, daß die am Förderband anliegenden Elemente als senkrecht an den Rollen angeordnete Führungsrollen ausgebildet sind, deren Aufgabe es ist, für einen optimalen Bandlauf zu sorgen.

In einer noch anderen Ausführungsform ist vorgesehen, mehrere Rollen in Längsrichtung des Förderbandes gesehen in einem Abstand hintereinander anzuordnen, wobei die Rollen jeweils abwechselnd auf der einen und der anderen Seite des Förderbandtrums des Förderbandes angeordnet sind. Eine derartige Anordnung der Rollen bewirkt ein mehrmaliges Umlenken des Förderbandes, was dazu führt, daß die Zwangsführung in diesem Bereich noch vergrößert wird.

Desweiteren ist vorgesehen, daß an dem Ende der Übertragungselemente, an denen die Führungselemente angeordnet sind, zwischen den Übertragungselementen und dem Rahmen des Großflächenstreuers zumindest eine Feder angeordnet ist. Infolge dieser Maßnahmenwird ein unterschiedlicher Differenzdruck, der von einer ungenauen und ungleichmäßigen Bandfertigung herrühren kann, ausgeglichen. Das Problem besteht nämlich darin, daß das Band auf der einen Seite eine größere Länge als auf der anderen Seite aufweisen kann bzw. auf der einen Seite eine größere Elastizität als auf der anderen Seite aufweisen kann. In diesen Fällen ist es dann erforderlich, daß der aus dieser Ungleichmäßigkeit des Förderbandes resultierende Differenzdruck durch zwischen den Übertragungselementen und dem Rahmen des Großflächenstreuers angeordnete Federn ausgeglichen wird. Hierbei muß die in bevorzugter Weise als Zugfeder ausgebildete Feder so eingestellt werden, daß der Differenzdruck Null wird, so daß im Normalfall der Steuerrahmen mittig läuft, ohne irgendwie eine Steuerung des Förderbandes über die Steuerrolle zu der einen oder anderen Seite vorzunehmen.

Weitere Einzelheiten sind der Beispielsbeschreibung sowie den Zeichnung zu entnehmen. Hierbei zeigen

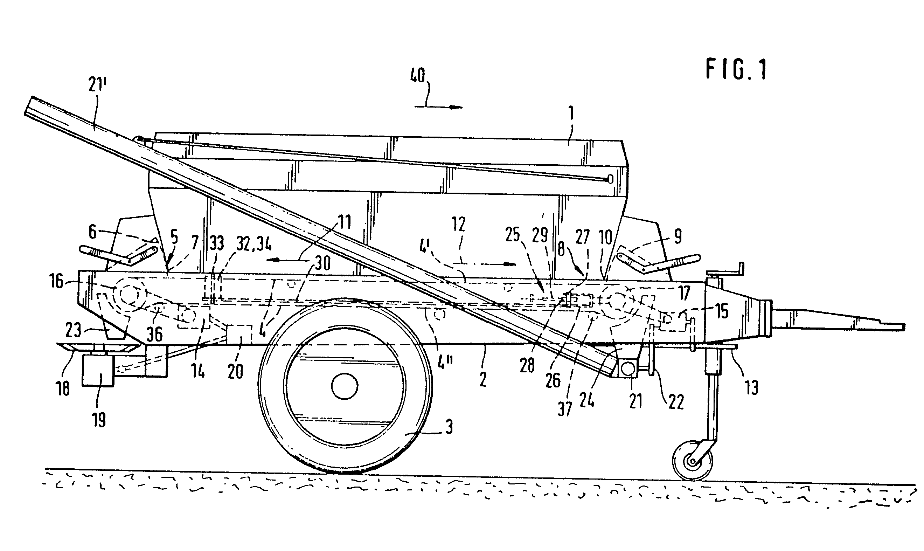

Figur 1 einen erfindungsgemäß ausgebildeten Großflächenstreuer in der Seitenansicht,

Figur 2 einen erfindungsgemäß ausgebildeten Steuerrahmen in uneingebautem Zustand in der Draufsicht,

Figur 3 die Anordnung der erfindungsgemäßen, als Rollen ausgebildeten Führungselemente am Förderbandtrum des Förderbandes in vergrößerter Darstellung, wobei ober- und unterhalb des Förderbandtrums jeweils eine Rolle angeordnet ist, in der Seitenansicht,

Figur 4 einen Teilausschnitt der erfindungsgemäßen Rollenanordnung gemäß Figur 2 in der Draufsicht,

Figur 5 die erfindungsgemäße Rollenanordnung mit drei Rollen in vergrößerter Darstellung und in der Seitenansicht,

Figur 6 einen Teilausschnitt der erfindungsgemäßen Rollenanordnung gemäß Figur 2 in der Draufsicht,

Figur 7 die erfindungsgemäße Anordnung der senkrecht zu den Rollen angeordneten führungsrollen in vergrößerter Darstellung in der Seitenansicht,

Figur 8 die erfindungsgemäße Anordnung der senkrechten Rollen in Teilansicht und in der Draufsicht und

Figur 9 die Anordnung des erfindungsgemäßen Steuerrahmens an der Fördereinrichtung des Großflächenstreuers in Prinzipdarstellung in Draufsicht, wobei am Ende der als Rahmen ausgebildeten Übertragungselemente Federn angeordnet sind.

Der Großflächenstreuer ist mit einem Vorratsbehälter 1, einem Rahmen 2 und einem Fahrwerk 3 ausgestattet. In dem, unteren Bereich des Vorratsbehälters 1 befindet sich das antreibbare und als Förderband 4 ausgebildete Förderorgan. In dem hinteren Bereich 5 des Vorratsbehälters 1 ist die über den Schieber 6 einstellbare Austrittsöffnung 7 an geordnet, während im vorderen Bereich 8 des Vorratsbehälters 1 die über den Schieber 9 einstellbare Austrittsöffnung 10 angebracht ist.

Das Förderband 4 ist in zwei Richtungen anzutreiben, wodurch die entgegengesetzten Förderrichtungen 11 und 12 entstehen. Dieses Förderband 4 wird von der Schlepperzapfwelle über die Antriebswelle 13, die Schneckengetriebe 14 bzw. 15 und den Umlenkrollen 16 bzw. 17 angetrieben.

Im Bereich unterhalb der hinteren Austrittsöffnung 7 des Vorratsbehälters 1 ist das als Scheibenstreuwerk 18 ausgebildete Streuorgan abnehmbar angeordnet. Der Antrieb 19 des Scheibenstreuwerkes 18 ist über das Getriebe 20 mit dem als Schneckengetriebe 14 ausgebildeten Antrieb für die hintere Umlenkrolle 16 gekoppelt.

Im Bereich der vorderen Austrittsöffnung 10 des Vorratsbehälters 1 ist das als Schneckenstreuwerk 21 ausgebildete Streuorgan abnehmbar angeordnet. Der Ausleger 21' des Schneckenstreuwerkes 21 befindet sich in Transportstellung nach hinten oben ragend seitlich neben dem Vorratsbehälter 1. Der Antrieb 22 des Schneckenstreuwerkes 21 ist durch das Schneckengetriebe 15 mit dem Antrieb der vorderen Umlenkrolle 17 gekoppelt.

In dem Schneckengetriebe 15 und im Getriebe 20 befinden sich Kupplungen, die zentral zu betätigen sind, über die die Antriebe der Umlenkrollen 16 und 17 wechselseitig ein- bzw. auszuschalten sind, um die entgegengesetzten Förderrichtungen 11 und 12 zu erreichen. Gleichzeitig wird durch diese Anordnung der Kupplung erreicht, daß bei der Förderrichtung 11 des Förderband 4 das auszubringende Material aus der hinteren Austrittsöffnung 7 über die Rutsche 23 zu dem angetriebenen Scheibenstreuwerk 18 fördert, wobei gleichzeitig das Schneckenstreuwerk 21 außer Betrieb ist, während bei Förderrichtung 12 das Förderband 4 das auszubringende Material aus der vorderen Austrittsöffnung 10 über die Rutsche 24 zu dem angetriebenen Streuwerk 21 fördert und wobei jetzt das Scheibenstreuwerk 18 außer Betrieb ist. Somit ist sichergestellt, daß das jenige Streuorgan angetrieben wird, in dessen Richtung Material gefördert wird.

Im unteren Bereich 25 des Vorratsbehälters 1 ist die einen Steuerrahmen 26 umfassende automatische Bandsteuerung zum Kontrollieren und Nachstellen des mittigen Bandlaufes des Förderbandes 4 angeordnet. Der Steuerrahmen 26 ist im vorderen Bereich 8 des Vorratbehälters 1 um die aufrechte Achse 27 schwenkbar am Querträger 28 gelagert. Der Querträger 28 ist mit den Spannelementen 29 an dem Düngerstreuerrahmen 2 angeordnet. Über diese Spannelemente 29 ist so das Förderband 4 zu spannen. An dem U-förmig ausgebildeten Steuerrahmen 26 ist die vordere Umlenkrolle 17. Der Steuerrahmen 26 ist unterhalb des Vorratsbehälters 1 angeordnet. Hierbei befindet sich der Steuerrahmen 26 zwischen den beiden Trums des Förderbandes 4. Das Förderband 4 wird von der Umlenkrolle 16 angetrieben. Die hintere Umlenkrolle 16 ist starr am Rahmen 2 des Großflächenstreuers gelagert, die vordere Umlenkrolle 17 an dem Steuerrahmen 26.

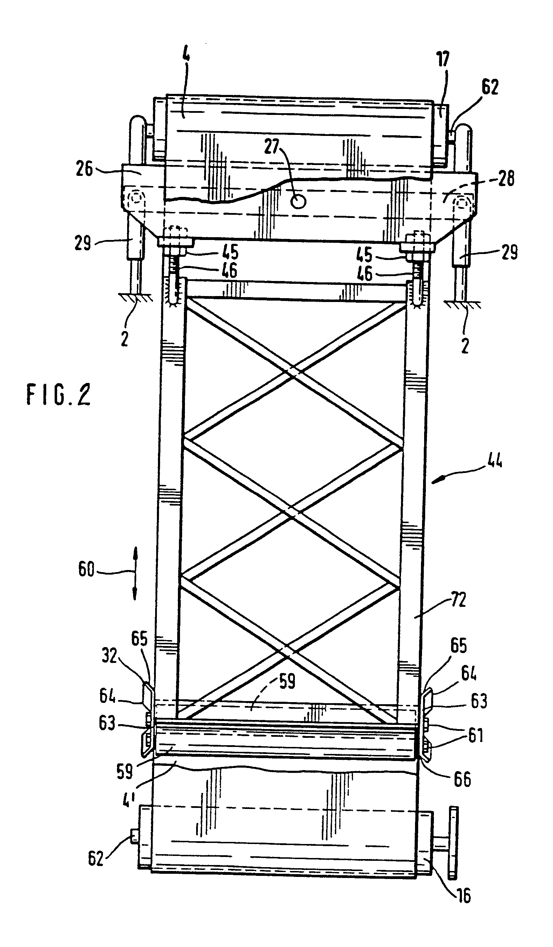

Die Figur 2 zeigt den Steuerrahmen 26 zur automatischen Bandsteuerung. Der Steuerrahmen 26 ist über die aufrechte Achse 27 schwenkbar mit dem Querträger 28 verbunden. Der Querträger 28 wiederum ist über die Steuerelemente 29 mit dem Rahmen 2 des Großflächenstreuers gekoppelt. Über eine einstellbare Schraubverbindung 45, bestehend aus den Einstellschrauben 46, ist der Steuerrahmen 26 mit dem Rahmenelement 44 verbunden. An der der Schraubverbindung 45 gegenüberliegenden Seite sind die Führungselemente 32 zur Übertragung der seitlichen Bewegung des Förderbandes 4 auf den Steuerrahmen 26, am Rahmenelement 44 angeordnet. Die miteinander in Verbindung stehenden Bauteile, wie der Steuerrahmen 26, das Rahmenelement 44 sowie die Führungselemente 32 sind im Bereich zwischen den Umlenktrommeln 16 und 17 und zwischen dem Ober- und Untertrum des Förderbandes 4 angeordnet. Die Führungselemente 32 sind als jeweils oberhalb und unterhalb des Förderbandtrums 4' angeordnete Rollen 59 ausgebildet und in Längsrichtung 60 dieses Förderbandtrums 4' derart angeordnet, daß das Förderbandtrum 4' etwas umgelenkt wird. Die Drehachsen 61 der Rollen 59 verlaufen parallel zu den Drehachsen 62 der Umlenktrommeln 16 und 17. Die Rollen 59 sind in dem Rahmen 63 drehbar gelagert, der am Rahmenelement 44 angeschweißt ist. Dieser Rahmen 63 weist seitlich an das Förderband 4 anliegende Elemente 64 auf, die als Gleitkufen 65 mit nach außen gebogenen Einlaufflächen 66 ausgebildet sind. Die Gleitkufen 65 verhindern ein seitliches Ausweichen des Förderbandtrums 4' aus dem Bereich der Rollen 59.

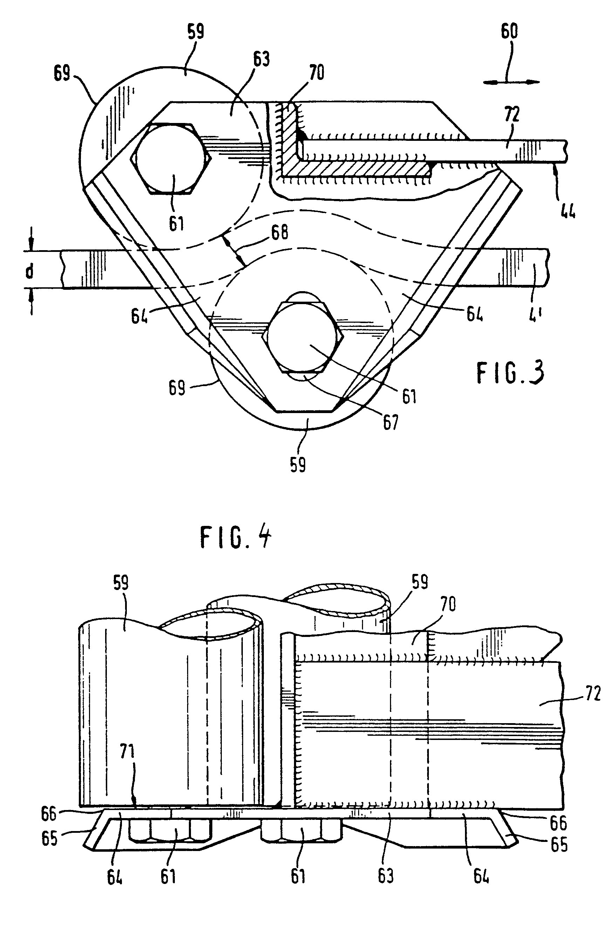

Die Figuren 3 und 4 verdeutlichen in vergrößerter Darstellung die Anordnung der Rollen 59 am Förderbandtrum 4'. Hierbei handelt es sich um zwei Rollen 59 die jeweils oberhalb und unterhalb des Förderbandtrums 4' in dem Rahmen 63 drehbar gelagert sind. Die Drehachse 61 der unterhalb des Förderbandtrums 4 angeordneten Rollen 59 läßt sich in einem Langloch 67 auf- und abbewegen, so daß sich der lichte Abstand 68 zwischen den Oberflächen 69 der jeweils einander am dichtesten benachbarten Rollen 50 einstellen läßt. Hierdurch besteht die Möglichkeit, sich der Dicke d des jeweiligen Transportbandes 4 anzupassen. Der die Rollen 59 aufnehmende Rahmen 63 weist die jeweils seitlich am Förderbandtrum 4' anliegenden Gleitkufen 65 mit den nach außen gebogenen Einlaufflächen 66 auf, die mit Hilfe des Winkeleisens 70 miteinander verbunden sind. An diesem Winkeleisen 70 und an der Innenseite 71 der jeweiligen Elemente 64 sind die Streben 72 des Rahmenelementes 44 angeschweißt, wodurch die Verbindung zwischen den führungselementen 32 und dem Steuerrahmen 26 hergestellt ist. Das Förderbandtrum 4' wird in dem Bereich, in dem die die seitliche Bewegung des Förderbandes 4 auf den Steuerrahmen 26 übertragenden Führungselemente 32 angeordnet sind, zwanggeführt, d.h., das Förderbandtrum 4' ist zwischen den Rollen 59 eingespannt, wobei die Gleitflächen 65 derart angeordnet sind, daß sie die seitliche Begrenzung darstellen und ein Abwandern des Förderbandes 4' aus dem Bereich der Rollen 59 verhindern. Infolge dieser Anordnung ergibt sich eine besonders stabile und unempfindliche Vorrichtung zur automatischen Bandsteuerung, deren Wirksamkeit besonders gut ist, weil beide Rollen 59 mitsteuern und wobei die Walkarbeit an den Kanten des Förderbandtrums 4' wesentlich reduziert wird.

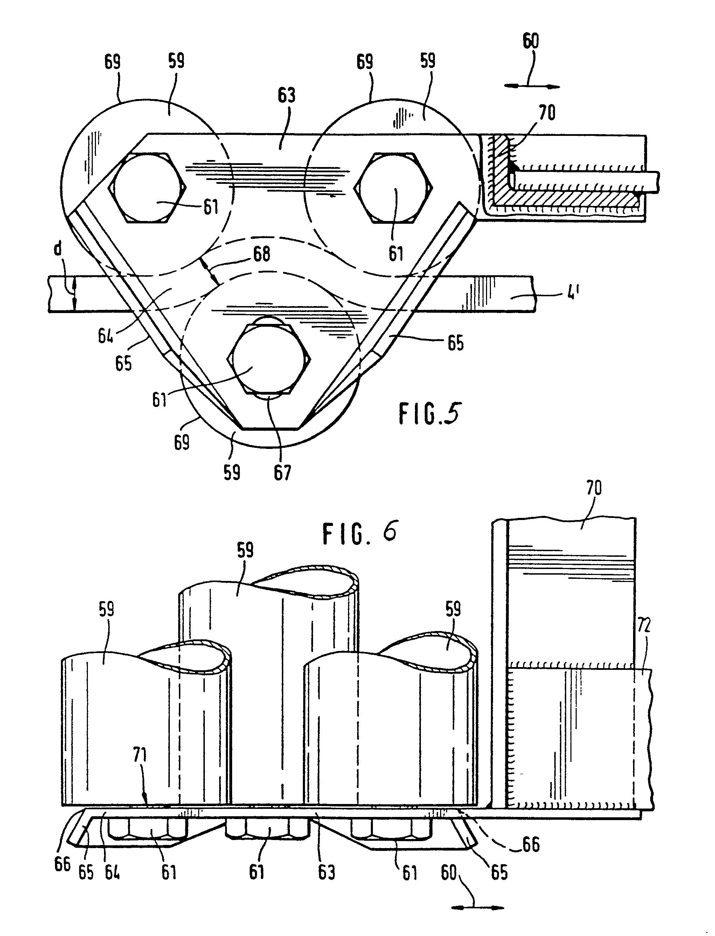

Zur Erzielung einer noch besseren Förderbandführung, z. B. bei besonders weichen Förderbändern, empfiehlt sich die Anordnung der Rollen 59 gemäß den Figuren 5 und 6, wobei die Rollen 59 in einem Dreieck angeordnet sind. Hierbei befinden sich zwei Rollen 59 oberhalb und eine Rolle 59 unterhalb des Förderbandtrums 4'. Die Drehachsen 61 der Rollen 59 sind derart angeordnet, daß sich die Drehachse 61 der unterhalb des Förderbandtrums 4' angeordneten Rolle 59 mitten zwischen den Drehachsen 61 der oberen Rollen 59 befindet. Das Förderbandtrum 4' wird von der unteren Rolle 59 gegen die Laufflächen der oberen Rollen 59 gedrückt und somit umgelenkt. Durch eine Zwangsführung des Förderbandtrums über die im Rahmen 63 gelagerten Rollen 59 sowie durch die seitlich am Förderbandtrum 4' anliegenden Gleitkufen 65 mit den nach außen gebogenen Einlaufflächen 66 führt bereits ein geringes seitliches Ausweichen des Förderbandes 4 zum Verschwenken des Steuerrahmens 26, was eine Rückführung des Förderbandes 4 in den mittigen Bandlauf zur Folge hat. Die Anlenkung des Rahmens 63 an das Rahmenelement 44 unterscheidet sich nicht von der Anordnung mit nur zwei Rollen 59.

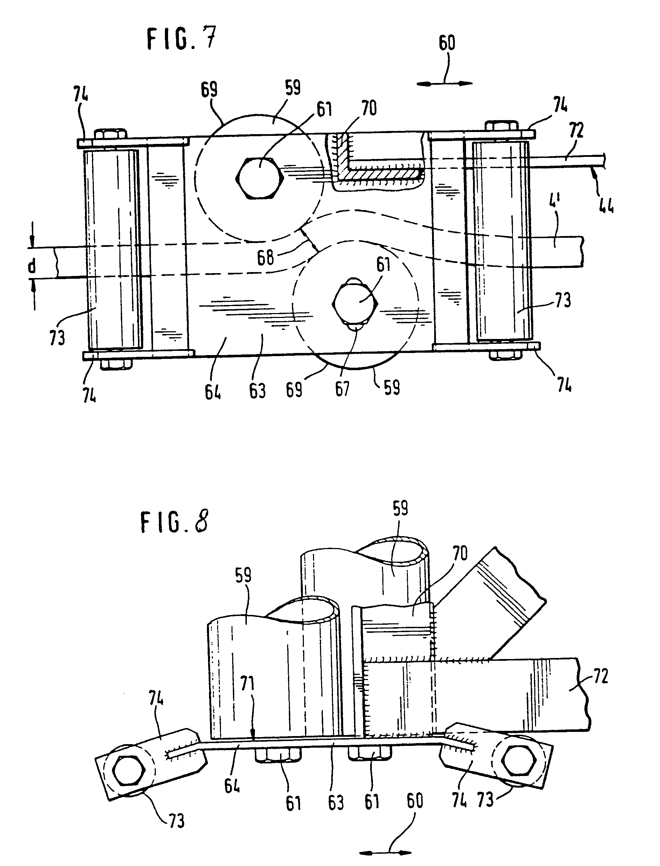

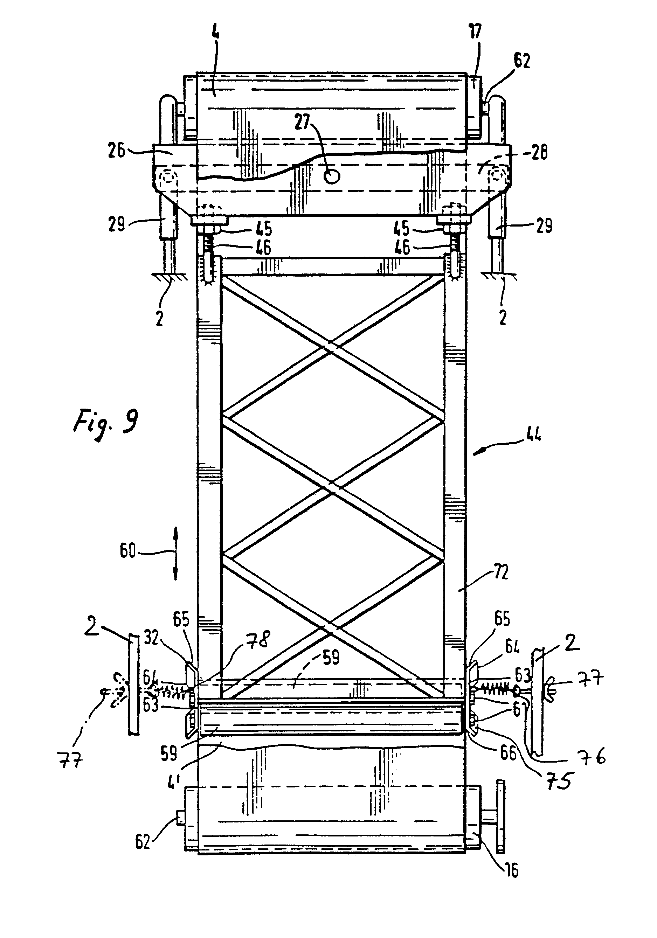

Die Figuren 7 und 8 zeigen ebenfalls die Anordnung von Rollen 59 jeweils oberhalb und unterhalb eines Förderbandtrums 4'. Die Rollen 59 sind auch hier in einem Rahmen 63 gelagert, der ebenfalls an den Seiten des Förderbandtrums 4' anliegende Elemente 64 aufweist, die mit Hilfe Ges Winkeleisens 70 verbunden sind. Die seitlich neben dem Förderbandtrums 4' angeordneten Elemente 64 weisen senkrecht zu den Rollen 59 angeordnete Führungsrollen 73 auf. Diese Führungsrollen 73 sind zwischen zwei als Halterungen ausgebildete Flacheisen 74 drehbar gelagert und Rollen ebenfalls ein seitliches Abwandern des Förderbandtrums 4' aus dem Bereich der Rollen 59 verhindern. Die senkrecht angeordneten Führungsrollen 73 sorgen für eine gute Führung des Förderbandtrums 4' im Bereich der Rollen 59 und somit für eine optimale Funktionsweise der automatischen Bandsteuerung, so daß es nur zu sehr geringen Abweichungen vom mittigen Bandlauf kommt, da bereits geringe Abweichungen sofort korrigiert werden. An dem die seitlich neben dem Förderbandtrum 4' angeordneten Elemente 64 verbindenden Winkeleisen 70 sind die Streben 72 des Rahmenelementes 74 angeschweißt und stellen so die Verbindung zu dem Steuerrahmen 26 her.

Bei der Ausgestaltung nach Figur 9 ist der Steuerrahmen 26 über die aufrechte Achse 27 schwenkbar mit dem Querträger 28 verbunden. Der Querträger 28 ist wiederum über die Steuerelemente 29 mit dem Rahmen 2 des Großflächenstreuers gekoppelt. Über eine einstellbare Schraubverbindung 45, bestehend aus den Einstellschrauben 46, ist der Steuerrahmen 26 mit dem Rahmen 44 verbunden. An der der Schraubverbindung 45 gegenüberliegenden Seite sind die Führungselemente 32 zur Übertragung der seitlichen Bewegung des Förderbandes 4 auf den Steuerrahmen 26, am Rahmen 44 angeordnet. Die miteinander in Verbindung stehenden Bauteile, wie der Steuerrahmen 26, der Rahmen 44 sowie die Führungselemente 32 sind im Bereich der Umlenktrommeln 16 und 17 und zwischen dem Ober- und Untertrum des Förderbandes angeordnet. Die Führungselemente 32 sind als jeweils und unterhalb des Förderbandtrums 4' angeordnete Rollen 59 ausgebildet und in Längsrichtung 60 dieses Förderbandtrum 4' derart angeordnet, daß das Förderbandtrum 4' etwas umgelenkt wird. Die Drehachsen 61 der Rollen 59 verlaufen parallel zu den Drehachsen 62 der Umlenktrommeln 16 und 17. Die Rollen 59 sind in dem Rahmen 63 drehbar gelagert, der am Rahmen 44 angeschweißt ist. Dieser Rahmen 63 weist seitlich an das Förderband 4 anliegende Elemente 64 auf, die als Gleitkufen 65 mit nach außen gebogenen Einlaufflächen 66 ausgebildet sind. Die Gleitkufen 66 verhindern ein seitliches Ausweichen des Förderbandtrums 4' aus dem Bereich der Rolle 59.

Wenn nun das Förderband 4 ungleichmäßig gefertigt ist bzw. auf der einen Seite eine andere Elastizität als auf der anderen Seite aufweist, so muß der hieraus resultierende Differenzdruck, der den Steuerrahmen zu verstellen versucht, ausgeglichen werden. Hierzu ist dann an dem Ende 75 des Rahmens 44 zwischen dem Rahmen 44 und dem Rahmen 2 des Großflächenstreuers die Feder 76 angeordnet, die den Differenzdruck, der aus der ungleichmäßigen Fertigung bzw. der ungleichmäßigen Elastizität des Förderbandes in Längsrichtung ausgleicht angeordnet. Hierbei ist die Zugfeder 76 über die Einstellschraube 77 so einstellbar, daß der Differenzdruck Null wird und der Rahmen 44 bei einem korrekten Bandlauf keine seitlichen Kräfte auf das Band ausübt und somit auch das Band nicht fehlerhaft verstellen kann. Sinnvoller Weise, um allen ungleichmäßigen Möglichkeiten der ungleichmäßigen Bandfertigung vorzubeuegen, ist auf der anderen Seite, die mit strichpunktierten Linie angeordnete Gegenfeder 78 angeordnet. Somit sind also an beiden Seiten des Rahmens 44 jeweils an dessen Ende und über zwischen dem Rahmen 44 und dem Rahmen 2 des Großflächenstreuers eine Zugfeder 76 und 78 angeordnet, die über die Einstellschraube 77 einzustellen ist.

## Patentansprüche

1. Großflächenstreuer, insbesondere Düngerstreiner, mit einem Fahrwerk (3) und einem langgestreckten Vorratsbehälter (1), der in seinem unteren Bereich ein antreibbares Förderband (4) aufweist, welches über zwei beabstandete Umlenkwalzen (16, 17) geführt bzw. angetrieben wird, wobei eine der Umlenkwalzen (17) über Verstellelemente einzustellen und so das Förderband (4) zu spannen ist, *gekennzeichnet durch,* einen um eine aufrechte Achse (27) schwenkbaren Steuerrahmen (26), in dem eine Umlenkwalze (17) gelagert und der mit einer Abtastanordnung (44, 63, 59) verbunden ist, die sich mit Übertragungselementen (72) in Richtung der anderen Umlenkwalze (16) erstreckt und mit diesen Übertragungselementen verbundene, als Führungselemente dienende, drehbare oder nicht drehbare Rollen (59) aufweist, die sich quer zur Förderband (4) erstrecken, unterhalb und oberhalb eines Förderbandtrums (4') angeordnet sind, seitliche Bewegungen des Förderbandes (4) abtasten und in entsprechende Verschwenkbewegungen des Steuerrahmens (26) und der darin gelagerten Umlenkwalze (17) umsetzen, wobei die Übertragungselemente im wesentlichen bis zu der fest angeordneten Umlenkwalze (16) reichen und in diesem Bereich die Rollen (59) tragen.

2. Großflächenstreuer nach Anspruch 1 *dadurch gekennzeichnet, daß* die Übertragungselemente von einem Rahmen (44, 72) gebildet werden.

3. Großflächenstreuer nach Anspruch 1 oder 2, *dadurch gekennzeichnet, daß* die Übertragungselemente von einem Rahmen (44, 72) gegenüber den Steuerrahmen (26) verstellbar bzw. einstellbar angeordnet sind.

4. Großflächenstreuer nach wenigstens einem der vorangegangenen Ansprüche, *dadurch gekennzeichnet, daß* der Steuerrahmen (26) an einem Querträger (28) des Düngerstreuerrahmens (2) schwenkbar gelagert ist und daß zwischen dem Querträger (28) und dem Düngerstreuerrahmen (2) Spannelemente (29) angeordnet sind.

5. Großflächenstreuer nach wenigstens einem der vorangegangenen Ansprüche, dadurch gekennzeichnet, daß die Achse (27) etwa in der Mitte der Bandbreite verläuft.

6. Großflächenstreuer nach venigstens einem vorhergehenden Anspruch, *dadurch gekennzeichnet, daß* die Rollen (59) in Längsrichtung (60) des Förderbandtrums (4') so angeordnet sind, daß das Förderbandtrum (4') zumindest etwas umgelenkt wird.

7. Großflächenstreuer nach venigstens einem vorhergehenden Anspruch, *dadurch gekennzeichnet, daß* oberhalb und unterhalb des Förderbandtrums (4') jeweils zumindest eine Rolle (59) angeordnet ist.

8. Großflächenstreuer nach Anspruch 7, *dadurch gekennzeichnet, daß* drei Rollen (59) vorgesehen sind.

9. Großflächenstreuer nach venigstens einem vorhergehenden Anspruch, *dadurch gekennzeichnet, daß* die Drehachsen (61) der Rollen (59) parallel zu den Drehachsen (62) der Umlenktrommeln (16, 17) verlaufen.

10. Großflächenstreuer nach venigstens einem vorhergehenden Anspruch, *dadurch gekennzeichnet, daß* der lichte Abstand (68) zwischen den Oberflächen (69) der jeweils aneinander am dichtesten benachbarten Rollen (59) zumindest etwas größer als die Dicke (d) des Transportbandes ist.

11. Großflächenstreuer nach venigstens einem vorhergehenden Anspruch, *dadurch gekennzeichnet, daß* die Rollen (59) an einem, Rahmen (63) angeordnet sind, der seitlich an das Förderband (4') anliegende Elemente (64) aufweist.

12. Großflächenstreuer nach Anspruch 11, *dadurch gekennzeichnet, daß* die Elemente (64) als Gleitkufen (65) mit nach außen gebogenen Einlaufflächen (66) ausgebildet sind.

13. Großflächenstreuer nach Anspruch 11, *dadurch gekennzeichnet, daß* Elemente (64) als senkrecht zu den Rollen (59) angeordnete Führungsrollen (73) ausgebildet sind.

14. Großflächenstreuer nach venigstens einem vorhergehenden Anspruch, *dadurch gekennzeichnet, daß* die Rollen (59) in Längsrichtung (60) des Förderbandes (4) gesehen in einem Abstand hintereinander angeordnet sind, und daß die Rollen (59) jeweils abwechselnd auf der einen und der anderen Seite des Förderbandtrums (4') des Förderbandes (4) angeordnet sind.

15. Großflächenstreuer nach venigstens einem vorhergehenden Anspruch, *dadurch gekennzeichnet*, daß an dem Ende (75) der Übertragungselemente, an dem die Rollen (59) angeordnet sind, zwischen den Übertragungselementen (26) und dem Rahmen (2) des Großflächenstreuers zumindest eine Feder (76, 78) angeordnet ist.

16. Großflächenstreuer nach Anspruch 15, *dadurch gekennzeichnet*, daß an den beiden Seiten der Übertragungselemente jeweils zwischen diesen und dem Rahmen (2) des Großflächenstreuers jeweils zumindest eine Feder (76, 78) angeordnet ist.

17. Großflächenstreuer nach Anspruch 15 und 16, *dadurch gekennzeichnet*, daß die Spannung der Feder (76, 78) einstellbar ist.

## Claims

1. Large-area spreader, more especially a fertilizer spreader, including a travelling means (3) and an elongate hopper (1), which is provided, in its lower region, with a drivable conveyor belt (4) which is guided or driven by two spaced-apart guide rollers (16, 17), one of the guide rollers (17) being capable of being set by adjusting means and thus tensioning the conveyor belt (4), characterised by a guide frame (26), which is pivotable about a vertical axle (27), has a guide roller (17) mounted therein and is connected to a probing arrangement (44, 63, 59), which extends with transmission members (72) in the direction of the other guide roller (16) and includes rotatable or non-rotatable rollers (59), which are connected to these transmission members and serve as guide members, which extend transversely relative to the conveyor belt (4), are disposed above and below a conveyor belt run (4'), probe lateral movements of the conveyor belt (4) and convert them into corresponding pivotal movements of the guide frame (26) and of the guide roller (17) mounted therein, the transmission members extending substantially to the fixedly disposed guide roller (16) and carrying the rollers (59) in this region.

2. Large-area spreader according to claim 1, characterised in that the transmission members are formed by a frame (44; 72).

3. Large-area spreader according to claim 1 or 2, characterised in that the transmission members (44, 72) are disposed so as to be adjustable or settable relative to the guide frame (26).

4. Large-area spreader according to at least one of the preceding claims, characterised in that the guide frame (26) is pivotably mounted on a crossbeam (28) of the fertilizer spreader frame (2), and in that tensioning members (29) are disposed between the crossbeam (28) and the fertilizer spreader frame (2).

5. Large-area spreader according to at least one of the preceding claims, characterised in that the axle (27) extends substantially in the centre of the belt width.

6. Large-area spreader according to at least one preceding claim, characterised in that the rollers (59) are disposed in the longitudinal direction (60) of the conveyor belt run (4') in such a manner that the conveyor belt run (4') is guided at least to some extent.

7. Large-area spreader according to at least one preceding claim, characterised in that at least one roller (59) is disposed above and below the conveyor belt run (4').

8. Large-area spreader according to claim 7, characterised in that three rollers (59) are provided.

9. Large-area spreader according to at least one preceding claim, characterised in that the rotary axles (61) of the rollers (59) extend parallel to the rotary axles (62) of the guide rollers (16, 17).

10. Large-area spreader according to at least one preceding claim, characterised in that the internal spacing (68) between the surfaces (69) of the rollers (59) most closely adjacent each other is at least slightly greater than the thickness (d) of the conveyor belt.

11. Large-area spreader according to at least one preceding claim, characterised in that the rollers (59) are disposed on a frame (63) which has members (64) laterally adjacent the conveyor belt (4').

12. Large-area spreader according to claim 11, characterised in that the members (64) are in the form of slide runners (65) having outwardly bent inside faces (66).

13. Large-area spreader according to claim 11, characterised in that members (64) are in the form of guide rollers (73) which are disposed vertically relative to the rollers (59).

14. Large-area spreader according to at least one preceding claim, characterised in that the rollers (59) are spaced one behind the other, when viewed with respect to the longitudinal direction (60) of the conveyor belt (4), and in that the rollers (59) are alternately disposed on one or other side of the conveyor belt run (4') of the conveyor belt (4).

15. Large-area spreader according to at least one preceding claim, characterised in that at least one spring (76, 78) is disposed on the end (75) of the transmission members, on which the rollers (59) are disposed, between the transmission members (26) and the frame (2) of the large-area spreader.

16. Large-area spreader according to claim 15, characterised in that at least one spring (76, 78) is disposed on each of the two sides of the transmission members between the latter and the frame (2) of the large-area spreader.

17. Large-area spreader according to claims 15 and 16, characterised in that the tension of the spring (76, 78) is adjustable.

**Revendications**

1. Epandeur pour grandes surfaces notamment épandeur d'engrais comportant un châssis de roulement (3) et un réservoir d'alimentation (1), allongé, qui comporte dans sa partie inférieure une bandetransporteuse (4), entraînée passant sur deux galets de renvoi (16, 17) écartés l'un de l'autre ou est entraînée par ces galets de renvoi et l'un des galets de renvoi (17) se règle par des éléments de réglage pour tendre la bande-transporteuse (4), épandeur caractérisé par un châssis de commande (26) pivotant autour d'un axe vertical (27), châssis dans lequel est monté un galet de renvoi (17) et qui est relié à un dispositif de détection (44, 63, 59) s'étendant avec des éléments de transmission (72) en direction de l'autre galet de renvoi (16) en étant relié à ces éléments de transmission servant d'éléments de guidage et portant des rouleaux (59) rotatifs ou non rotatifs qui s'étendent transversalement à la bande-transporteuse (4), en-dessous et au-dessus d'un brin (4') de la bandetransporteuse, pour détecter les mouvements latéraux de la bande-transporteuse (4), et les transformer en des mouvements de basculement correspondants du châssis de commande (26) et du galet de renvoi (17) porté par ce châssis, les éléments de transmission arrivant principalement jusqu'au galet de renvoi (16) à montage fixe et portant à ce niveau les rouleaux (59).

2. Epandeur pour grandes surfaces selon la revendication 1, caractérisé en ce que les éléments de transmission sont constitués par un châssis (44, 72).

3. Epandeur pour grandes surfaces selon la revendication 1 ou 2, caractérisé en ce que les éléments de transmission (44, 72) sont montés réglables ou mobiles par rapport au châssis de commande (26).

4. Epandeur pour grandes surfaces selon au moins l'une des revendications 1 à 3, caractérisé en ce que le châssis de commande (26) est monté basculant sur une traverse (28) du châssis (2) de l'épandeur d'engrais et en ce que les éléments de tension (29) sont prévus entre la traverse (28) et le châssis (2) de l'épandeur d'engrais.

5. Epandeur pour grandes surfaces selon au moins l'une quelconque des revendications 1 à 4, caractérisé en ce que l'axe (27) passe sensiblement au milieu de la largeur de la bande.

6. Epandeur pour grandes surfaces selon au moins l'une quelconque des revendications 1 à 5, caractérisé en ce que les rouleaux (59) sont répartis dans la direction longitudinale (60) du brin (4') de la bande-transporteuse et ce brin (4') est au moins légèrement dévié.

7. Epandeur pour grandes surfaces selon au moins l'une quelconque des revendications 1 à 6, caractérisé par au moins un rouleau (59) respectif disposé au-dessus et en-dessous du brin (4') de la bandetransporteuse.

8. Epandeur pour grandes surfaces selon la revendication 7, caractérisé en ce qu'il comporte trois rouleaux (59).

9. Epandeur pour grandes surfaces selon au moins l'une quelconque des revendications 1 à 8, caractérisé en ce que les axes de rotation (61) des rouleaux (59) sont parallèles aux axes de rotation (62) des galets de renvoi (16, 17).

10. Epandeur pour grandes surfaces selon au moins l'une quelconque des revendications 1 à 9, caractérisé en ce que l'intervalle libre (68) entre les surfaces (69) des rouleaux (59) les plus proches est au moins légèrement supérieur à l'épaisseur (d) de la bande-transporteuse.

11. Epandeur pour grandes surfaces selon l'une quelconque des revendications 1 à 10, caractérisé en ce que les rouleaux (59) sont montés sur un châssis (63) qui comporte des éléments (64) s'appliquant latéralement contre la bande-transporteuse (4').

12. Epandeur pour grandes surfaces selon la revendication 11, caractérisé en ce que les éléments (64) sont constitués par des patins (65) ayant des surfaces d'entrée (66) recourbées vers l'extérieur.

13. Epandeur pour grandes surfaces selon la revendication 11, caractérisé en ce que les éléments (64) sont des rouleaux de guidage (73) perpendiculaires aux rouleaux (59).

14. Epandeur pour grandes surfaces selon au moins l'une quelconque des revendications 1 à 13, caractérisé en ce que les rouleaux (59) sont disposés à un certain intervalle l'un derrière l'autre dans la direction longitudinale (60) de la bande-transporteuse (4) et les rouleaux (59) se situent en alternance d'un côté et de l'autre du brin (4') de la bandetransporteuse (4).

15. Epandeur pour grandes surfaces selon au moins l'une quelconque des revendications 1 à 14, caractérisé en ce qu'à l'extrémité (75) des éléments de transmission, là où se trouvent les rouleaux (59), il est prévu au moins un ressort (76, 78) entre les éléments de transmission (26) et le châssis (2) de l'épandeur.

16. Epandeur pour grandes surfaces selon la revendication 15, caractérisé en ce qu'il est prévu chaque fois au moins un ressort (76, 78) des deux côtés des éléments de transmission, chaque fois entre ces éléments et le châssis (2) de l'épandeur.

17. Epandeur pour grandes surfaces selon la revendication 15 et la revendication 16, caractérisé en ce que la tension des ressorts (76, 78) est réglable. S06

FIG.1

FIG.2

FIG.3

FIG.4

FIG.5

FIG. 6

FIG. 7

FIG. 8

Fig. 9